# EUROPEAN PATENT SPECIFICATION

(11) **EP 3 076 600 B1**
(45) Date of publication and mention of the grant of the patent: **25.07.2018**
(21) Application number: 16160110.9
(22) Date of filing: 14.03.2016
(51) Int. Cl.: H04L 12/24

(54) **DISPLAY METHOD, DEVICE, AND PROGRAM**
ANZEIGEVERFAHREN, -VORRICHTUNG UND PROGRAMM
PROCÉDÉ D'AFFICHAGE, DISPOSITIF ET PROGRAMME

(30) Priority: 31.03.2015 JP 2015073709
(43) Date of publication of application: 05.10.2016
(73) Proprietor: FUJITSU LIMITED, Kawasaki-shi, Kanagawa 211-8588 (JP)
(72) Inventor: Takezawa, Daisuke, Kanagawa, 211-8588 (JP); Kubota, Ryosuke, Fukuoka-shi, 814-8588 (JP); Yamane, Shinji, Fukuoka-shi, 814-8588 (JP); Nogami, Tetsuya, Fukuoka-shi, 814-8588 (JP)
(74) Representative: Hoffmann Eitle

(56) References cited:
- WO-A1-2004/102520
- GB-A- 2 350 031
- US-A1- 2003 180 042
- US-A1- 2004 061 701
- US-A1- 2014 006 956

## Description

### FIELD

The embodiments discussed herein are related to a display method and device for displaying a state of a network on the basis of an information element collected from a communication device included in the network.

### BACKGROUND

As a network managing system introduced to an enterprise, a system in which a network topology is represented by use of a graphical user interface (GUI) is known. In such a system, a network configuration is visualized, and displays of, for example, settings for a communication device included in a network and a failure that has occurred in the communication device are realized.

In a network topology provided by a GUI, a transmission path that connects communication devices is represented by one link (line) that connects ports of the respective communication devices, in order to faithfully represent a physical connection between communication devices. In this case, the network topology is used not only for visualizing a physical structure, but also for visualizing a logical structure between communication devices, as described below. The network topology is used for the purpose of reporting an information element obtained as a result of introducing or referring to network settings by a user initiation, an information element on a network failure that occurs irregularly, or an information element on an amount of traffic in a transmission path.

With respect to a display of a network state, the following conventional technology is known (see, for example, Patent Document 1). Means for generating traffic display data uses display data that indicates connection states of a node and a link that are included in an information network, and an amount of transmission information detected between reported nodes for each different transmission direction. Then, the means for generating traffic display data generates pieces of display data that indicate an information transmission direction for each link and an amount of information in the transmission direction. These pieces of display data are displayed on display means.

Patent Document 1: Japanese Laid-open Patent Publication No. 05-158878

GB 2 350 031 A relates to a system for displaying a graphical representation or map of a computer, telecommunications or other network including a store for information about the network components and links in the network. A processor is provided which converts the information into a format suitable for visually displaying on display apparatus. The visual display is a map representing the physical relationships of the components and links. For example, it may also show information about the type of link (e.g. half duplex/full duplex), speed of link (which may be represented by thickness of the line showing the link) and whether the link has been validated by the system.

US 2004/061701 A1 describes a method for displaying storage network information in a user interface. The method includes identifying a topology map for a storage network and gathering operating information, which is processed to determine a performance parameter, such as utilization. A performance monitoring display is generated including a topology map and a graphical representation of the performance parameter, which is positioned in the display relative to the components for which the parameter applies. The graphical representation can be a pair of parallel dashed lines between communicating components. The dashes in the lines are moved using a speed coding scheme representative of the performance parameter, e.g., with faster speeds used to show higher ranges of utilization, and the direction of movement matches data flow. The dashed lines are colored using a color coding scheme and the line segment lengths vary in association with the performance value.

US 2014/006956 A1 relates to a system that may receive a user input that identifies an optical route in an optical network, and may receive a user input that identifies a view type, where the view type includes a data channel view or a control channel view. The system may provide, based on the user input, a user interface that displays a representation of network entities associated with the optical route, a representation of an amplification capability associated with a network entity, a representation of a first parameter associated with the network entity, where the representation of the first parameter is based on the user input, a representation of optical links that connect the network entities, where the optical links indicate an optical transmission direction between two network entities, and a representation of a second parameter associated with an optical link, where the representation of the second parameter is based on the user input.

US 2003/180042 A1 describes a method for the simultaneous graphical display of paths of optical wavelength channels in a telecommunications network together with one or more channel attributes. The graphical display of the network also shows the direction of data flow transported by the channels. An audible or visual alarm for an error condition for a channel attribute on a link in the network can be produced if requires. The operator can also obtain detailed information on a channel by positioning the mouse over a channel.

### SUMMARY

In one aspect, an object of the present invention is to make it possible to display, in an easily identifiable state, a plurality of information elements that indicate a state of a network.

The object of the invention is achieved by the subject-matter of the independent claims. Advantageous embodiments are defined in the dependent claims. Further examples are provided for facilitating the understanding of the invention.

### BRIEF DESCRIPTION OF DRAWINGS

FIG. 1 is a diagram according to an embodiment of the present invention;
FIGs. 2A and 2B illustrate examples of data structures of tables used in the embodiment (1);
FIGs. 3A-3C illustrate examples of data structures of tables used in the embodiment (2);
FIGs. 4A and 4B illustrate examples of data structures of tables used in the embodiment (3);
FIG. 5 is a flowchart that illustrates an example of processing according to the embodiment;
FIG. 6 illustrates another example of displaying a symbol; FIG. 7 illustrates yet another example of displaying a symbol;
FIG. 8 illustrates examples of GUIs that designate a display/non-display of an information element; and
FIG. 9 is a diagram that illustrates an example of a hardware configuration by which the embodiment can be realized.

### DESCRIPTION OF EMBODIMENTS

However, a link includes various information elements described above, so it is difficult to display a plurality of pieces of information on a state of network settings, a network failure, and an amount of traffic in one line such that a user can identify easily.

Further, in the conventional technology described above, only a single information element is displayed in an easily identifiable manner, and it is not possible to display a plurality of information elements such that a user can identify easily.

An object of the present invention is to make it possible to display, in an easily identifiable state, a plurality of information elements that indicate a state of a network.

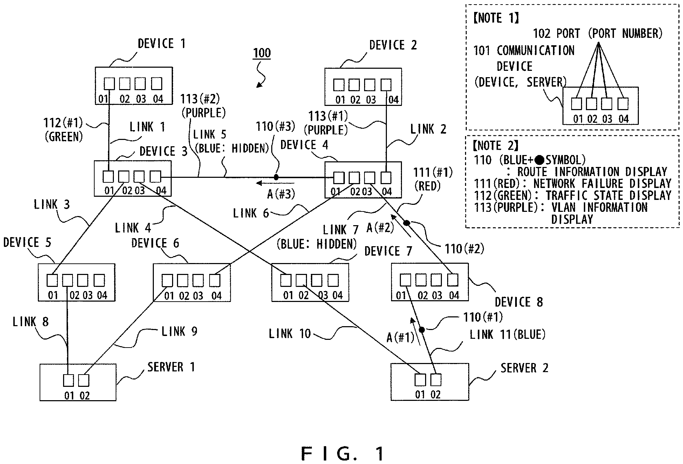

Embodiments of the present invention will now be described in detail with reference to the drawings. FIG. 1 is a diagram of a network topology displayed on a network-state displaying device (not shown) according to an embodiment of the present invention (hereinafter referred to as a "present embodiment") . A network 100 corresponding to the network topology has a configuration in which communication devices 101 are connected to one another through a transmission path. The network-state displaying device collects information from each communication device 101.

According to the present embodiment, for example, devices 1 to 8 and servers 1 and 2 devices 1 to 8 and servers 1 and 2 that are all communication devices 101 are connected to one another through a transmission path, which forms the configuration of the network 100. A server computer is an example of servers 1 and 2, and a router device, an L2 switch, and an L3 switch are examples of devices 1 to 8.

Each communication device 101 includes ports 102 indicated as a port number such as "01", "02", "03", and "04" (for devices 1 to 8), or "01" and "02" (for servers 1 and 2).

One of the ports 102 of a communication device 101 is connected to one of the ports 102 of another communication device 101 through a transmission path (including a wireless one), which forms, between the communication devices 101, a physical link indicated as one of Links 1 to 11.

The network-state displaying device (not shown) is a management terminal, which performs network-state displaying processing by executing, using a CPU (central processing unit) included in itself, a network-state displaying program stored in a memory included in itself.

As a basic operation, the network-state displaying device generates data of a network topology on the basis of information collected from each communication device 101 (devices 1 to 8 and servers 1 and 2) and displays the data. As illustrated in FIG. 1, the network topology is a diagram in which devices 1 to 8 and servers 1 and 2 that configure the network 100 are connected to one another through Links 1 to 11.

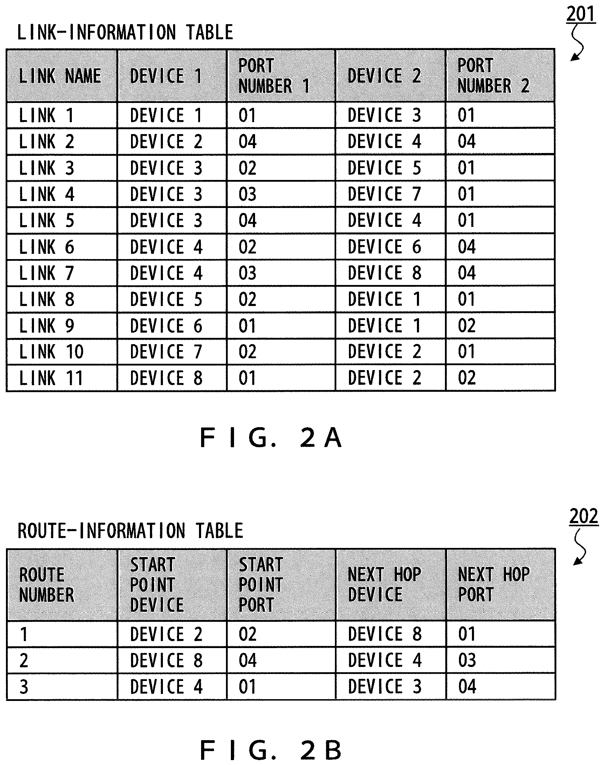

In order to generate a network topology, the network-state displaying device collects connection-destination information for each port 102 from each of the communication devices 101 (hereinafter referred to as a "device") that are devices 1 to 8 and servers 1 and 2. A user may generate the topology using a GUI. Then, the network-state displaying device generates a link-information table 201 illustrated in FIG. 2A and holds the table in a memory included in itself. Each entry in the link-information table 201 holds, for each link that is indicated by a name held in "LINK NAME" , names and port numbers of devices in "DEVICE 1" and "PORT NUMBER 1", and in "DEVICE 2" and "PORT NUMBER 2", the devices being each connected to the respective ends of the link. For example, a first entry in the link-information table 201 defines a state in which Link 1 is formed by connecting a port 102 with number 01 of device 1 and a port 102 with number 01 of device 3. Likewise, second to eleventh entries in the link-information table 201 define Links 2 to 11. Accordingly, the network-state displaying device is able to generate and display drawing data of the network topology in which devices 1 to 8 and servers 1 and 2 are connected to one another through Links 1 to 11, as illustrated in FIG. 1.

The network-state displaying device displays, on the network topology, a blue first line that indicates a specific transmission path in the network 100, and a symbol whose display position is dynamically moved in a direction in which data is transmitted through the transmission path. In this case, for example, the network-state displaying device may individually draw the blue first line and the symbol in different display layers and may display the two layers superimposed over each other.

In this case, the layer is a logical image-drawing area in which one layer has a drawing area for one image. The layer is a drawing function that displays an image on a drawing area of each layer so that the images are superimposed over one another, which makes it possible to control display/non-display of an image for each layer and to control which image displayed on the layer is to be displayed above.

Information on a route established with respect to a transmission path and acquired from a communication device is an example of the information element for which a symbol is displayed. As the information on a route, the network-state displaying device generates a route-information table 202 illustrated in FIG. 2B and holds the table in a memory included in itself. Each entry in the route-information table 202 holds, for each route that is indicated by a number in "ROUTE NUMBER", names and port numbers of a devices of a start point and a next hop on the route in "START POINT DEVICE" and "START POINT PORT", and in "NEXT HOP DEVICE" and "NEXT HOP PORT". For example, a first entry in the route-information table 202 indicates that a route with number 1 is formed from a port with number 02 of server 2 to a port with number 01 of device 8. Likewise, for example, a second entry in the route-information table 202 indicates that a route with number 2 is formed from a port with number 04 of server 8 to a port with number 03 of device 4. Further, likewise, for example, a third entry in the route-information table 202 indicates that a route with number 3 is formed from a port with number 01 of device 4 to a port with number 04 of device 3.

The network-state displaying device refers to the link-information table 201 of FIG. 2A using a connection relationship between the port with number 02 of server 2 and the port with number 01 of device 8 that are extracted from the first entry in the route-information table 202, so as to extract Link 11. As a result, the network-state displaying device displays a symbol 110 (#1) marked with "●" on a blue first line in Link 11 in the network topology of FIG. 1, and repeatedly dynamically moves it in a direction of an arrow A (#1) from server 2 to device 8. The symbol 110 marked with "●" is also used in an area other than the area of the blue first line.

Likewise, the network-state displaying device refers to the link-information table 201 of FIG. 2A using a connection relationship between the port with number 04 of device 8 and the port with number 03 of device 4 that are obtained from the second entry in the route-information table 202, so as to extract Link 7. As a result, the network-state displaying device displays a symbol 110 (#2) marked with "●" on a blue first line in Link 7 in the network topology of FIG. 1, and repeatedly dynamically moves it in a direction of an arrow A (#2) from device 8 to device 4.

Further, the network-state displaying device refers to the link-information table 201 of FIG. 2A using a connection relationship between the port with number 01 of device 4 and the port with number 04 of device 3 that are obtained from the third entry in the route-information table 202, so as to extract Link 5. As a result, the network-state displaying device 1 displays a symbol 110 (#3) marked with "●" on a blue first line in Link 5 in the network topology of FIG. 1, and repeatedly dynamically moves it in a direction of an arrow A (#3) from device 4 to device 3.

In this way, a user such as a network administrator is able to easily recognize that routes are established for Link 11, 7, and 5 by corresponding symbols 110 (#1, #2, and #3) that move dynamically.

Next, the network-state displaying device displays, on the network topology, a second line superimposed over the above-described display, according to the occurrence of a prescribed event that is detected on the basis of information collected from devices 1 to 8 and servers 1 and 2. In other words, the second line is drawn on the basis of a different information element than the first line. Here, when the second line has an overlapping portion with the first line described above, a display state is adjusted such that the symbol is moved in a position or in a size in which at least a portion of the symbol is not hidden under the second line. In this case, for example, the network-state displaying device may individually draw the first line and the second line in different layers and may display the two layers superimposed over each other. This permits the network-state displaying device to determine which layer is to be preferentially displayed above, the layer on which the first line and the symbol 110 marked with "●" is displayed, or the layer of the second line, so as to control the display operation.

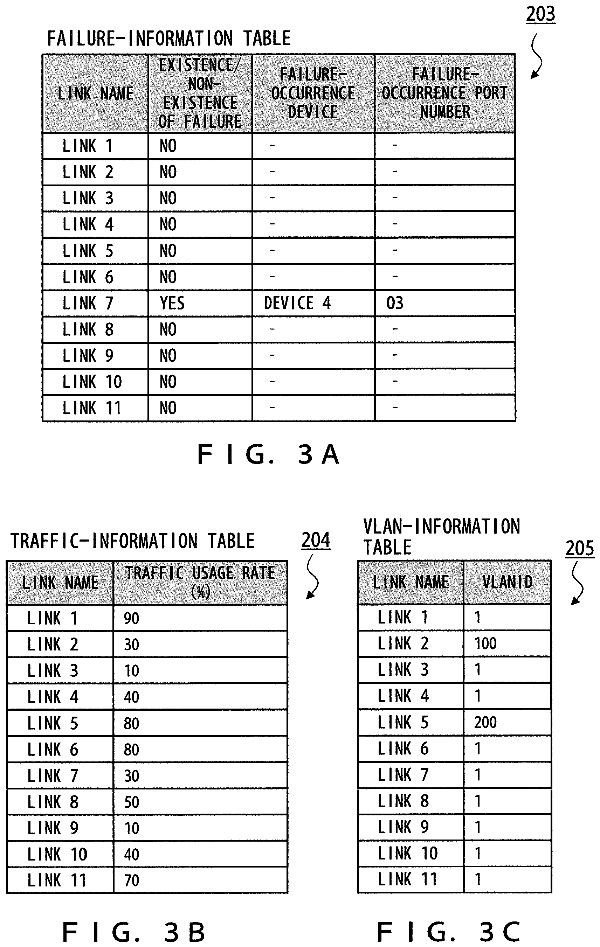

Failure information on devices 1 to 8 or servers 1 and 2, or on a transmission path is an example of the above-described information element that corresponds to the occurrence of an event. As the failure information, the network-state displaying device 1 generates a failure-information table 203 illustrated in FIG. 3A, and holds the table in a memory included in itself. Each entry in the failure-information table 203 holds "YES" or "NO" in "EXISTENCE/NON-EXISTENCE OF FAILURE" for each route that is indicated by a name in "LINK NAME" . Further, when there exists a failure, the table holds, in "FAILURE-OCCURRENCE DEVICE" and "FAILURE-OCCURRENCE PORT NUMBER" in the entry, a name of a device (a communication device 101) in which the failure has occurred and a number of a port in which the failure has occurred. For example, a seventh entry in the failure-information table 203 indicates that a failure has occurred in Link 7 and a device in which the failure has occurred and a number of a port in which the failure has occurred are device 4 and number 03, respectively. Entries other than the seventh entry in the failure-information table 203 indicate that a failure has not occurred in links other than Link 7.

According to the information that "EXISTENCE/NON-EXISTENCE OF FAILURE"="YES" in Link 7 which is extracted from the seventh entry in the network-state displaying device 203, the network-state displaying device displays a red second line 111 (#1) superimposed over a blue first line in Link 7, the red second line 111 (#1) indicating the occurrence of a failure. The network-state displaying device displays a pixel in a layer of the red second line 111 (#1) that indicates the occurrence of a failure, giving priority to it over a pixel in a layer of the blue first line that is previously placed in Link 7 on which route information is displayed.

In this case, as illustrated in FIG. 1, the network-state displaying device adjusts a display state such that at least a portion of the symbol 110 (#2) marked with "●" that moves in a line in Link 7 is not hidden under the read second line 111 (#1) . For example, the network-state displaying device draws, in a first layer, the blue first line that is previously placed in Link 7, and displays the red second line 111 (#1) in a second layer. A symbol marked with "●" may be displayed in the first layer, the second layer, or a layer other than these layers. Here, "a layer is displayed" refers to a state in which data corresponding to a layer in a memory is drawn when the data is written in an image memory. Then, the network-state displaying device controls such that the second layer is displayed above and the first layer is displayed below. Accordingly, the blue first line that is previously placed is completely hidden under the red second line 111 (#1) that indicates the occurrence of a failure, but the movement of a portion of the symbol 110 (#2) marked with "●" that is not hidden under the red second line 111 (#1) can be found out.

As described above, according to the present embodiment, even when there are a plurality of information elements to be displayed with respect to one transmission path, these information elements can be displayed together at a time in a state in which each of them is identifiable. In the example described above, it is possible to find out a route from the symbol 110 (#2) marked with "●" that moves in the line in Link 7, and it is possible to easily find out from the red second line 111 (#1) that a failure has occurred with respect to Link 7.

Information on an amount of traffic in a transmission path is another example of the above-described information element that corresponds to the occurrence of an event. As the information on an amount of traffic, the network-state displaying device generates a traffic-information table 204 illustrated in FIG. 3B, and holds the table in a memory included in itself. For each link that is indicated by a name held in "LINK NAME", each entry in the traffic-information table 204 holds, in "TRAFFIC USAGE RATE (%) ", a usage rate with respect to a maximum capacity of traffic in the transmission path. For example, a first entry in the traffic-information table 204 indicates that a usage rate in Link 1 is 90 %. Likewise, second entry to eleventh entries in the traffic-information table 204 hold usage rates in Link 2 to Link 11, respectively.

The network-state displaying device extracts a link name from "LINK NAME" in an entry that satisfies a prescribed condition and that is included in the entries in the traffic-information table 204. Then, the network-state displaying device displays, on the network topology, a green second line superimposed over a line corresponding to the link name, the green second line indicating a traffic state. For example, in the traffic-information table 204 illustrated in FIG. 3B, the network-state displaying device extracts a link name=Link 1 from "LINK NAME" in an entry in which a usage rate is not less than a prescribed threshold, for example, not less than 90 %. Then, the network-state displaying device displays, on the network topology, a green second line 112 (#1) superimposed over a line in Link 1, the green second line 112 (#1) indicating that the amount of traffic is about to reach a limit. Also in this case, a symbol marked with "●" can also be used when route information has to be displayed on Link 1.

Further, information on a virtual network including a transmission path is another example of the above-described information element that corresponds to the occurrence of an event. As the information on a virtual network, the network-state displaying device generates a VLAN (virtual local area network) -information table 205 illustrated in FIG. 3C, and holds the table in a memory included in itself. For each link that is indicated by a name held in "LINK NAME", each entry in the VLAN-information table 205 holds, in "VLAN ID", a VLAN ID that is equal to or more than zero (virtual network identifier) to which the link belongs. For example, a second entry in the VLAN-information table 205 indicates that VLAN ID=100 is allocated to Link 2, and likewise, a fifth entry indicates that VLAN ID=100 is allocated to Link 5. Other entries indicate that VLAN ID=1 that is a default is allocated to links other than Link 2 and Link 5.

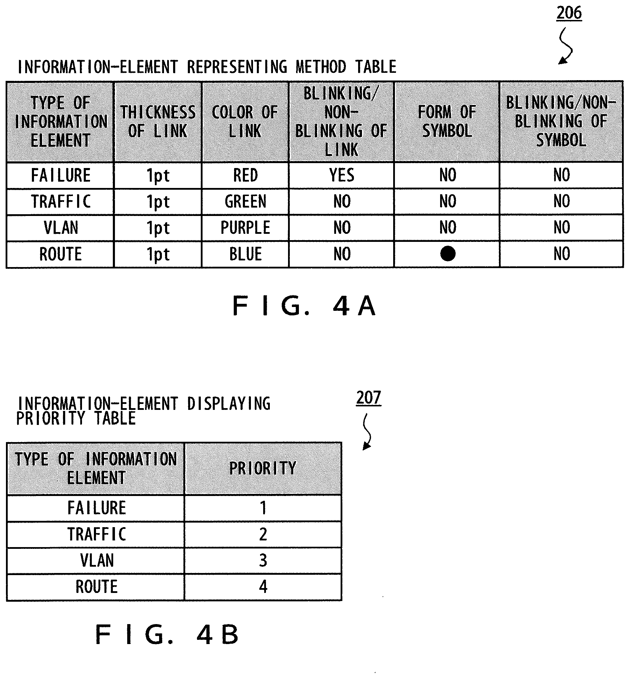

The network-state displaying device extracts a link name from "LINK NAME" in an entry to which a VLAN ID other than VLAN ID=1 is allocated and that is included in the entries in the VLAN-information table 205 . Then, the network-state displaying device displays, on the network topology, a purple second line superimposed over a line corresponding to the link name, the purple second line indicating that a VLAN ID is allocated. For example, in the VLAN-information table 205 illustrated in FIG. 3C, the network-state displaying device extracts link names=Link 2 and Link 5 from "LINK NAME" in entries to which a VLAN ID other than VLAN ID=1 is allocated. A user may designate a VLAN ID to be displayed on a screen using a GUI. Then, the network-state displaying device displays, on the network topology, a purple second line 113 (#1) superimposed over a line in Link 2, the purple second line 113 (#1) indicating that a VLAN ID is allocated. Further, the network-state displaying device displays, on the network topology, a purple second line 113 (#2) superimposed over a line in Link 5, the purple second line 113 (#2) indicating that a VLAN ID is allocated. In this case, the network-state displaying device 1 refers to an information-element displaying priority table 207 illustrated in FIG. 4B that will be described below, and thereby recognizes that an information element for a virtual network is given priority for display over an information element for a route. Accordingly, the network-state displaying device 1 displays a pixel in a layer of the purple second line 113 (#1) that indicates a virtual network, giving priority to it over a pixel in a layer of the blue first line that is previously placed in Link 5 on which route information is displayed.

In this case, as illustrated in FIG. 1, with respect to Link 5, the network-state displaying device 1 adjusts a display state such that at least a portion of the symbol 110 (#3) marked with "●" that moves in a line in Link 5 is not hidden under the purple second line 113 (#2) . For example, the network-state displaying device 1 draws, in a first layer, the blue first line that is previously placed in Link 5, and displays the purple second line 113 (#2) in a second layer. A symbol marked with "●" (#3) is displayed on the first layer, the second layer, or a layer other than these layers. Then, the network-state displaying device 1 controls such that the second layer is displayed above and the first layer is displayed below. Accordingly, the blue first line that is previously placed is completely hidden under the purple second line 113 (#2) that indicates a virtual network, but the movement of a portion of the symbol 110 (#3) marked with "●" that is not hidden under the purple second line 113 (#2) can be found out.

As described above, it is possible to find out a route from the symbol 110 (#3) marked with "●" that moves in the line in Link 5, and it is possible to easily find out from the purple second line 113 (#2) that a virtual network is established with respect to Link 5.

The number of the above-described information elements to be displayed that correspond to the occurrence of an event is not limited to one with respect to an information element, for example route information, for which a symbol is displayed, but a plurality of types of second lines that indicate information elements such as failure information, traffic information, and VLAN information may be displayed in a superimposed state. In this case, the network-state displaying device adjusts a display state such that a symbol moves in a position or in a size in which at least a portion of the symbol is not hidden under the second lines. Specifically, the network-state displaying device refers to an information-element representing method table 206 illustrated in FIG. 4A that will be described below using the above-described information element corresponding to the occurrence of an event, and thereby changes the attributes of a second line in a corresponding entry, the attributes including a color, a thickness, a blinking state, and a type.

FIG. 4A illustrates an example of a data structure of the information-element representing method table 206 which the network-state displaying device holds in a memory included in itself. Each entry in the information-element representing method table 206 holds, for each information element registered in "TYPE OF INFORMATION ELEMENT", pieces of attribute information on a thickness, a color, and blinking/non-blinking of a link to be displayed in "THICKNESS OF LINK", "COLOR OF LINK", and "BLINKING/NON-BLINKING OF LINK", respectively. Further, each entry holds pieces of attribute information on a form and blinking/non-blinking of a symbol to be displayed in "FORM OF SYMBOL" and "BLINKING/NON-BLINKING OF SYMBOL", respectively. The network-state displaying device refers to the information-element representing method table 206 when it displays a first line, a symbol, or a second line that corresponds to one of the information elements including route information, failure information, information indicating a traffic state, and VLAN information described above. As a result, for each information element, the network-state displaying device determines an attribute of a line or symbol to be displayed to perform a display.

The information-element representing method table 206 can also be configured to be provided for each authority of a user or for each network administration. In this case, the network-state displaying device may refer to a corresponding information-element representing method table 206 for each authority of a user or for each network administration, and may control the display that corresponds to each information element and in which a line or a symbol is used. This makes it possible to customize each of the attributes of the symbol, the first line, and the second line described above for each authority of a user or for each network administration.

FIG. 4B illustrates an example of a data structure of the information-element displaying priority table 207 which the network-state displaying device holds in a memory included in itself. Each entry in the information-element displaying priority table 207 holds, for each information element registered in "TYPE OF INFORMATION ELEMENT", a value corresponding to an order of priority in "PRIORITY". An information element with a smaller value is given a higher priority. The network-state displaying device refers to the information-element displaying priority table 207, so as to determine a priority for a display of symbol/line and to perform a control. In this case, an information element with a smaller number for an order of priority, that is, an information element given a higher priority is displayed on a layer above.

The information-element displaying priority table 207 can also be configured to be provided for each authority of a user or for each network administration. In this case, the network-state displaying device refers to a corresponding information-element displaying priority table 207 for each authority of a user or for each network administration, and determines a priority for a display of symbol/line to perform a control. This makes it possible to customize a priority when displaying the first symbol, the second symbol, the first line, and the second line described above superimposed over one another for each authority of a user or for each network administration.

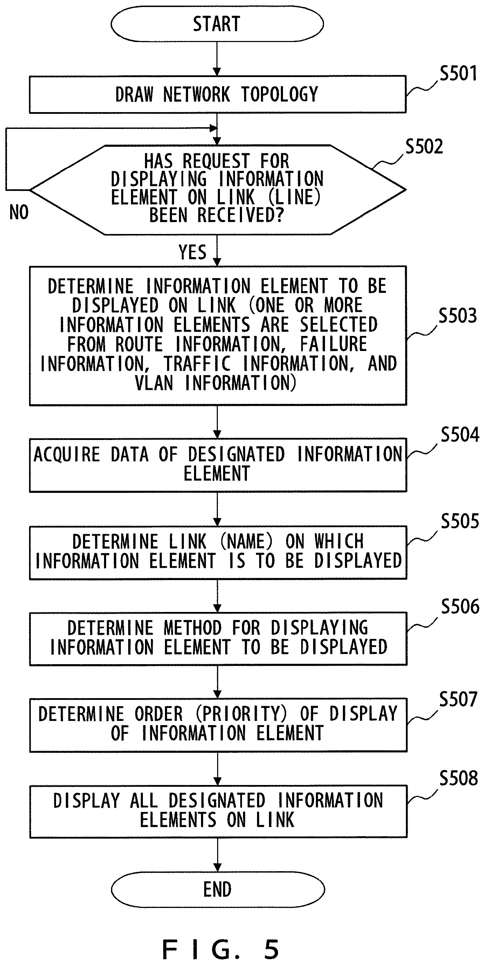

FIG. 5 is a flowchart that illustrates an example of network-state displaying processing performed by the network-state displaying device of FIG. 1.

First, the network-state displaying device generates the link-information table 201 illustrated in FIG. 2A described above on the basis of the information collected from each communication device 101 (devices 1 to 8 and servers 1 and 2) . Then, as described above, the network-state displaying device refers to the link-information table 201, so as to generate data of a network topology and to perform a display, in the form of a diagram illustrated in FIG. 1 (Step S501).

Next, the network-state displaying device waits until it receives a request for displaying an information element on a link (a line) as a request issued by a GUI manipulated by a user or as a request issued by a determination in a system (it is repeatedly determined to be NO in Step S502).

When it is determined to be YES in Step S502, the network-state displaying device determines an information element to be displayed on a link. With respect to the information element, one or more information elements are selected from the route information, the failure information, the traffic information, and the VLAN information described above (Step S503).

Next, the network-state displaying device refers to the route-information table 202 (FIG. 2B), the failure-information table 203 (FIG. 3A), the traffic-information table 204 (FIG. 3B), or the VLAN-information table 205 (FIG. 3C) described above. The network-state displaying device thereby acquires data corresponding to the above information element from each of the tables, as described above (Step S504).

In addition, as described above, the network-state displaying device determines a link (a link name) on which an information element is to be displayed following the data acquisition in Step S504 (Step S505).

Further, as described above, the network-state displaying device refers to the information-element representing method table 206 of FIG. 4A, so as to determine a method for displaying an information element to be displayed (Step S506).

Furthermore, as described above, the network-state displaying device refers to the information-element displaying priority table 207 of FIG. 4B, so as to determine a priority for a display of an information element (Step S507).

Finally, the network-state displaying device displays, on the link determined in Step S505, all the designated information elements superimposed over one another (Step S508).

At this point, the network-state displaying device terminates the network-state displaying processing.

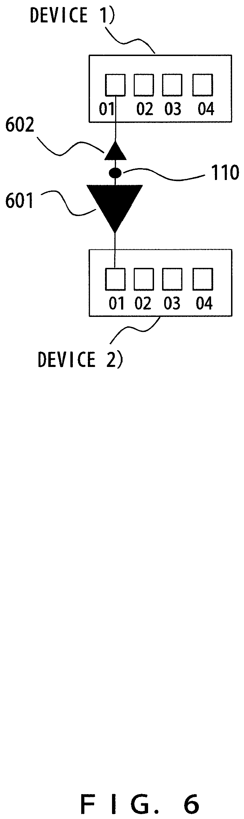

FIG. 6 illustrates another example of displaying a symbol. In this example, in order to represent an amount of traffic in a link, not only a second line but also another symbol that is different from a moving symbol 110 indicating route information is further displayed with respect to an information element determined according to the occurrence of an event that indicates a traffic state. In FIG. 6, an amount of traffic is represented by the size of a symbol, like 601 or 602. For example, a larger amount of traffic (data traffic) flows through a larger symbol between device 1 and device 2. Using such a representation, an amount of traffic can be confirmed at a glance even when a symbol is superimposed over another information element. Further, an amount of transmission data and an amount of reception data are included in an amount of traffic for each port of a network device, so the amount of transmission data and the amount of reception data can also be individually confirmed if the directions of the movements of the symbols for transmission and reception are represented in opposite directions, like 601 and 602.

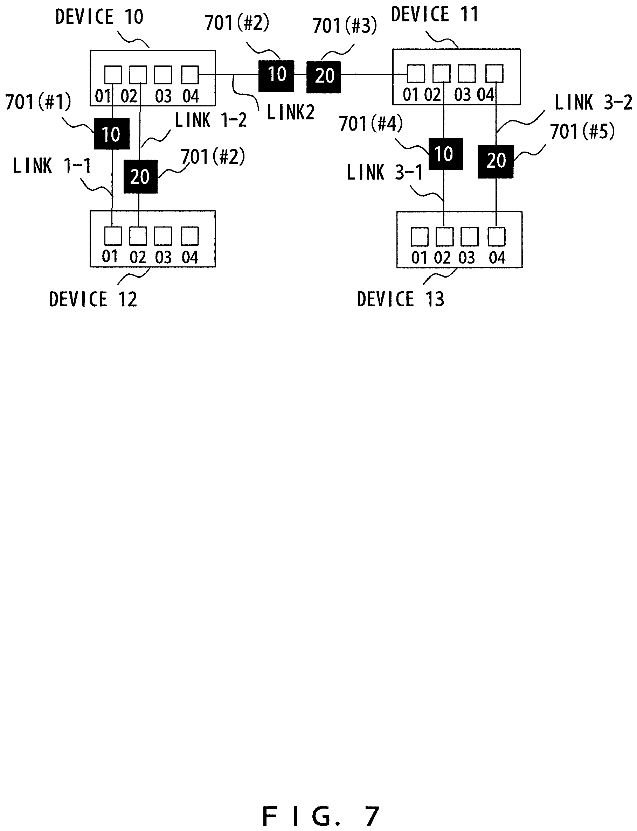

FIG. 7 illustrates yet another example of displaying a symbol. In this example, in order to represent a VLAN ID, not only a second line but also another symbol that is different from a moving symbol indicating route information is further displayed with respect to an information element determined according to the occurrence of an event that indicates VLAN information. In FIG. 7, when VLAN information is represented in a link such as Link 1-1, Link 1-2, Link 2, Link 3-1, or Link 3-2, a number of a VLAN ID is added to a symbol 701 (#1 to #5) . In the example of FIG. 1, it is not possible to identify a VLAN ID just by seeing a purple second line 113 indicating VLAN information, but it is possible to identify a VLAN ID using the representation of FIG. 7. In this case, the direction of a data flow does not have to be represented in the VLAN information. In the example of FIG. 7, the route of VLAN 10 is "port with number 01 of device 12→port with number 01 of device 10→port with number 04 of device10→port with number 01 of device 11→port with number 02 of device 11→port with number 02 of device 13". On the other hand, the route of VLAN 20 is "port with number 02 of device 12→port with number 02 of device 10 →port with number 04 of device 10→port with number 01 of device 11→port with number 04 of device 11→port with number 04 of device 13". It is possible to recognize that the route from the port with number 04 of device 10 to the port with number 01 of device 11 is a route through which both VLAN 10 and VLAN 20 pass. A VLAN ID can also be recognized when a symbol represented in this way and another symbol are used together.

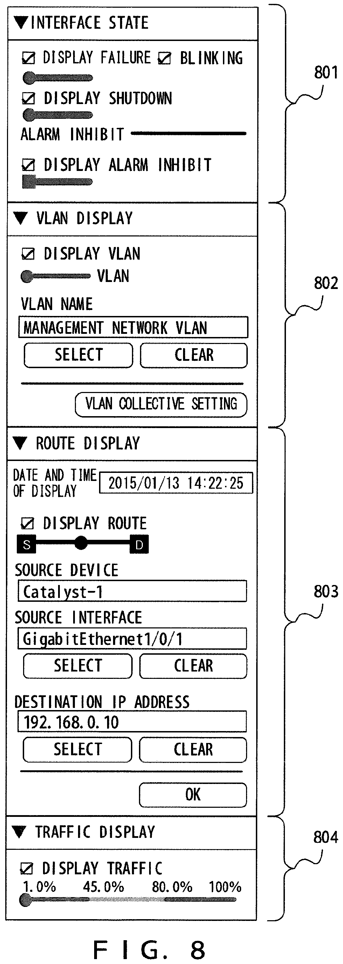

FIG. 8 illustrates examples of GUIs that designate a display/non-display of an information element. Using a setting screen of a GUI 801, whether a line reporting failure information is to be displayed on a screen of the network topology of FIG. 1, and whether blinking for the report is to be performed are selected. Using a setting screen of a GUI 802, whether a line indicating a setting state of a VLAN is to be displayed on the screen of the network topology of FIG. 1 is selected. Using a setting screen of a GUI 803, whether route information is to be displayed on the screen of the network topology of FIG. 1 is selected. Using a setting screen of a GUI 804, whether a traffic state is to be displayed on the screen of the network topology of FIG. 1 is selected.

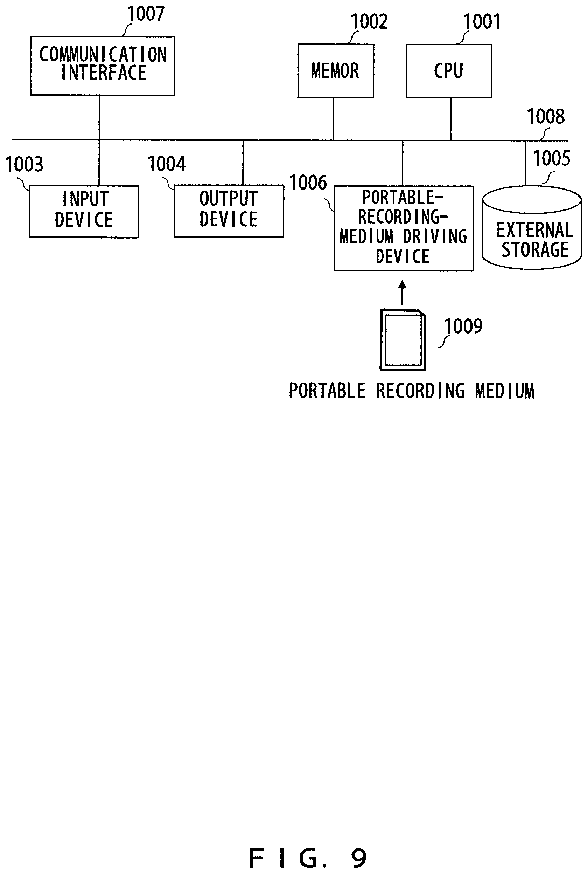

FIG. 9 illustrates an example of a hardware configuration of a computer, by which the network-state displaying device 1 of the embodiment can be realized. The computer of FIG. 9 has a CPU 1001, a memory 1002, an input device 1003, an output device 1004, an external storage 1005, a portable-recording-medium driving device 1006 into which a portable recording medium 1009 is inserted, and a communication interface 1007 that are connected to one another through a bus 1008. The configuration illustrated in FIG. 9 is an example of a computer by which the system described above can be realized, but the configuration of such a computer is not limited to this configuration.

The CPU 1001 controls the overall computer. The memory 1002 is a memory such as a RAM that temporality stores therein a program or data stored in the external storage 1005 (or the portable recording medium 1009), for example, when the program is executed or when the data is updated. The CPU 1001 reads out a program into the memory 1002 and executes it, so as to perform a total control. In the present embodiment, the memory 1002 stores therein the link-information table 201 (FIG. 2A), the route-information table 202 (FIG. 2B), the failure-information table 203 (FIG. 3A), the traffic-information table 204 (FIG. 3B), or the VLAN-information table 205 (FIG. 3C).

The input device 1003 detects an input manipulation performed by a user using, for example, a keyboard or a mouse, and reports a result of the detection to the CPU 1001.

The output device 1004 outputs, to a display device or a printer, data that is transmitted due to a control performed by the CPU 1001. The output device 1004 according to the present embodiment includes a display device that displays the network topology of FIG. 1 or the information elements of FIG. 6 or 7, or that displays the GUI setting screens of FIG. 8.

The external storage 1005 is, for example, a hard disk storage device. It is mainly used for storing various pieces of data or programs.

The portable-recording-medium driving device 1006 accepts a portable recording medium 1009 such as an SD card, a compact flash, a CD-ROM, a DVD, or an optical disk, and serves as an auxiliary device of the external storage 1005.

The communication interface 1007 is a device for connecting a communication line such as a LAN (local area network) or a WAN (wide area network), and includes a function for connecting to the network 100 (FIG. 1).

The system according to the present embodiment is realized by the CPU 1001 executing a program of network-state displaying processing that is provided with a network-state displaying function realized by, for example, the flowchart of FIG. 5. The program may be stored in, for example, the external storage 1005 or the portable recording medium 1009 and may be distributed from it, or a configuration in which the program can be acquired from a network through the communication interface 1007 may be provided.

## Claims

1. A display method for displaying a state of a network (100) on the basis of information collected from a communication device (101) included in the network, the display method comprising:
displaying a first line that indicates a specific transmission path in the network and a symbol whose display position is dynamically moved in a direction in which data is transmitted through the transmission path;
displaying, on a layer that is located above a layer on which the first line is displayed, a second line superimposed over the first line and the symbol, according to the occurrence of a prescribed event that is detected on the basis of the collected information, wherein the second line has an overlapping portion with the first line; and
moving the symbol in a position or in a size in which at least a portion of the symbol is not hidden under the second line;
wherein the respective links corresponding to the first line and the second line each represent a connection relationship between a port provided at one device and a port provided at another device in a manner such that the ports are distinguishable from each other.

2. The display method according to claim 1, wherein
an information element for which the symbol is displayed includes information on a route established with respect to the transmission path.

3. The display method according to claim 1, further comprising displaying another symbol that can be distinguished from the symbol and that has an attribute corresponding to an information element determined according to the occurrence of the event.

4. The display method according to claim 3, wherein
when the information element corresponding to the occurrence of the event includes information on an amount of traffic, the form of the another symbol varies according to whether the information on an amount of traffic is information on transmission or reception.

5. The display method according to claim 3, wherein
when the information element corresponding to the occurrence of the event includes information on a virtual network, all or some virtual network IDs included in the information on a virtual network are displayed on the another symbol.

6. The display method according to claim 1, wherein
from among the lines that include the second line and have an overlapping portion, the second line is displayed on a layer located on the top.

7. A display device (1) adapted to display a state of a network on the basis of information collected from a communication device included in the network, the display device comprising:
first display means (1004) adapted to display a first line indicating a specific transmission path in the network and a symbol whose display position is dynamically moved in a direction in which data is transmitted through the transmission path;
second display means (1004) adapted to display, on a layer that is located above a layer on which the first line is displayed, a second line superimposed over the first line and the symbol, according to the occurrence of a prescribed event that is detected on the basis of the collected information, wherein the second line has an overlapping portion with the first line; and
symbol control means (1001) adapted to move the symbol in a position or in a size in which at least a portion of the symbol is not hidden under the second line;
wherein the respective links corresponding to the first line and the second line each represent a connection relationship between a port provided at one device and a port provided at another device in a manner such that the ports are distinguishable from each other.

8. A program for causing a computer to execute a process, the computer adapted to display a state of a network on the basis of information collected from a communication device included in the network, the process comprising:
displaying a first line indicating a specific transmission path in the network and a symbol whose display position is dynamically moved in a direction in which data is transmitted through the transmission path;
displaying, on a layer that is located above a layer on which the first line is displayed, a second line superimposed over the first line and the symbol, according to the occurrence of a prescribed event that is detected on the basis of the collected information, wherein the second line has an overlapping portion with the first line; and
moving the symbol in a position or in a size in which at least a portion of the symbol is not hidden under the second line;
wherein the respective links corresponding to the first line and the second line each represent a connection relationship between a port provided at one device and a port provided at another device in a manner such that the ports are distinguishable from each other.

## Patentansprüche

1. Anzeigeverfahren zum Anzeigen eines Zustands eines Netzwerks (100) auf der Basis von Informationen, die von einer Kommunikationsvorrichtung (101) gesammelt werden, die in dem Netzwerk eingeschlossen ist, wobei das Anzeigeverfahren umfasst:
Anzeigen einer ersten Zeile, die einen spezifischen Übertragungspfad in dem Netzwerk angibt, und eines Symbols, dessen Anzeigeposition dynamisch in einer Richtung bewegt wird, in der Daten über den Übertragungspfad übertragen werden;
auf einer Schicht, die sich über einer Schicht befindet, auf der die erste Zeile angezeigt wird, Anzeigen einer zweiten Zeile, welche die erste Zeile und das Symbol überlagert, entsprechend dem Auftreten eines vorgeschriebenen Ereignisses, das auf der Basis der gesammelten Information erkannt wird, wobei sich die zweite Zeile in einem Abschnitt mit der ersten Zeile überschneidet; und
Bewegen des Symbols in eine Position oder zu einer Größe, in der mindestens ein Abschnitt des Symbols nicht unter der zweiten Zeile verborgen ist;
wobei die jeweiligen Verbindungen, die der ersten Zeile und der zweiten Zeile entsprechen, jeweils eine Verbindungsbeziehung zwischen einem Anschluss, der an einer Vorrichtung bereitgestellt ist, und einem Anschluss, der an einer weiteren Vorrichtung bereitgestellt ist, darstellen, sodass die Anschlüsse voneinander unterscheidbar sind.

2. Anzeigeverfahren nach Anspruch 1, wobei
ein Informationselement, für welches das Symbol angezeigt wird, Informationen über eine Route aufweist, die in Bezug auf den Übertragungspfad eingerichtet ist.

3. Anzeigeverfahren nach Anspruch 1, weiter umfassend das Anzeigen eines anderen Symbols, das von dem Symbol unterschieden werden kann und das ein Attribut aufweist, das einem Informationselement entspricht, das gemäß dem Auftreten des Ereignisses bestimmt wird.

4. Anzeigeverfahren nach Anspruch 3, wobei,
wenn das Informationselement, das dem Auftreten des Ereignisses entspricht, Informationen über eine Verkehrsmenge aufweist, die Form des anderen Symbols je nachdem variiert, ob die Information über eine Verkehrsmenge eine Information über die Übertragung oder den Empfang ist.

5. Anzeigeverfahren nach Anspruch 3, wobei,
wenn das Informationselement, das dem Auftreten des Ereignisses entspricht, Informationen über ein virtuelles Netzwerk aufweist, alle oder einige virtuelle Netzwerk-IDs, die in den Informationen eines virtuellen Netzwerks enthalten sind, auf dem anderen Symbol angezeigt werden.

6. Anzeigeverfahren nach Anspruch 1, wobei
von den Zeilen, welche die zweite Zeile aufweisen und einen sich überschneidenden Abschnitt aufweisen, die zweite Zeile auf einer Schicht angezeigt wird, die auf der Oberseite angeordnet ist.

7. Anzeigevorrichtung (1), die zum Anzeigen eines Zustands eines Netzwerks auf der Basis von Informationen, die von einer Kommunikationsvorrichtung gesammelt werden, die in dem Netzwerk enthalten ist, ausgelegt ist, wobei die Anzeigevorrichtung umfasst:
erste Anzeigemittel (1004), die zum Anzeigen einer ersten Zeile, die einen spezifischen Übertragungspfad in dem Netzwerk angibt, und eines Symbols, dessen Anzeigeposition dynamisch in eine Richtung bewegt wird, in der Daten über den Übertragungspfad übertragen werden, ausgelegt sind;
zweite Anzeigemittel (1004), die auf einer Schicht, die sich über einer Schicht befindet, auf der die erste Zeile angezeigt wird, zum Anzeigen einer zweiten Zeile, welche die erste Zeile und das Symbol überlagert, entsprechend dem Auftreten eines vorgeschriebenen Ereignisses, das auf der Basis der gesammelten Information erkannt wird, wobei die zweite Zeile einen sich überschneidenden Abschnitt mit der ersten Zeile aufweist, ausgelegt sind; und
Symbolsteuermittel (1001), die zum Bewegen des Symbols in eine Position oder zu einer Größe, in der mindestens ein Abschnitt des Symbols nicht unter der zweiten Zeile verborgen ist, ausgelegt sind;
wobei die jeweiligen Verbindungen, die der ersten Zeile und der zweiten Zeile entsprechen, jeweils eine Verbindungsbeziehung zwischen einem Anschluss, der an einer Vorrichtung bereitgestellt ist, und einem Anschluss, der an einer weiteren Vorrichtung bereitgestellt ist, darstellen, sodass die Anschlüsse voneinander unterscheidbar sind.

8. Programm zum Veranlassen eines Computers, einen Prozess auszuführen, wobei der Computer zum Anzeigen eines Zustands eines Netzwerks auf der Basis von Informationen, die von einer Kommunikationsvorrichtung gesammelt werden, die in dem Netzwerk enthalten ist, ausgelegt ist, wobei der Prozess umfasst:
Anzeigen einer ersten Zeile, die einen spezifischen Übertragungspfad in dem Netzwerk angibt, und eines Symbols, dessen Anzeigeposition dynamisch in einer Richtung bewegt wird, in der Daten über den Übertragungspfad übertragen werden;
auf einer Schicht, die sich über einer Schicht befindet, auf der die erste Zeile angezeigt wird, Anzeigen einer zweiten Zeile, welche die erste Zeile und das Symbol überlagert, entsprechend dem Auftreten eines vorgeschriebenen Ereignisses, das auf der Basis der gesammelten Information erkannt wird, wobei sich die zweite Zeile in einem Abschnitt mit der ersten Zeile überschneidet; und
Bewegen des Symbols in eine Position oder zu einer Größe, in der mindestens ein Abschnitt des Symbols nicht unter der zweiten Zeile verborgen ist;
wobei die jeweiligen Verbindungen, die der ersten Zeile und der zweiten Zeile entsprechen, jeweils eine Verbindungsbeziehung zwischen einem Anschluss, der an einer Vorrichtung bereitgestellt ist, und einem Anschluss, der an einer weiteren Vorrichtung bereitgestellt ist, darstellen, sodass die Anschlüsse voneinander unterscheidbar sind.

## Revendications

1. Procédé d'affichage pour afficher un état d'un réseau (100) sur la base d'informations recueillies d'un dispositif de communication (101) inclus dans le réseau, le procédé d'affichage comprenant :
l'affichage d'une première ligne qui indique un trajet de transmission spécifique dans le réseau et un symbole dont la position d'affichage est déplacée de manière dynamique dans une direction dans laquelle des données sont transmises à travers le trajet de transmission ;
l'affichage sur une couche qui est située au-dessus d'une couche sur laquelle la première ligne est affichée d'une seconde ligne superposée à la première ligne et au symbole selon l'occurrence d'un événement prescrit qui est détecté sur la base des informations recueillies, dans lequel la seconde ligne a une partie chevauchante avec la première ligne ; et
le déplacement du symbole dans une position ou dans une taille à laquelle au moins une partie du symbole n'est pas dissimulée sous la seconde ligne ;
dans lequel les liaisons respectives correspondant à la première ligne et à la seconde ligne représentent chacune une relation de connexion entre un port disposé sur un dispositif et un port disposé sur un autre dispositif de manière telle que les ports puissent se distinguer l'un de l'autre.

2. Procédé d'affichage selon la revendication 1, dans lequel
un élément d'information pour lequel le symbole est affiché comprend des informations sur une route établie par rapport au trajet de transmission.

3. Procédé d'affichage selon la revendication 1, comprenant en outre l'affichage d'un autre symbole qui peut être distingué du symbole et qui a un attribut correspondant à un élément d'information déterminé selon l'occurrence de l'événement.

4. Procédé d'affichage selon la revendication 3, dans lequel,
lorsque l'élément d'information correspondant à l'occurrence de l'événement comprend des informations sur une quantité de trafic, la forme du un autre symbole varie selon que les informations sur une quantité de trafic sont des informations sur la transmission ou la réception.

5. Procédé d'affichage selon la revendication 3, dans lequel,
lorsque l'élément d'information correspondant à l'occurrence de l'événement comprend des informations sur un réseau virtuel, tous ou certains ID du réseau virtuel inclus dans les informations sur un réseau virtuel sont affichés sur l'autre symbole.

6. Procédé d'affichage selon la revendication 1, dans lequel,
parmi les lignes qui comprennent la seconde ligne et ont une partie chevauchante, la seconde ligne est affichée sur une couche située au sommet.

7. Dispositif d'affichage (1) qui est à même d'afficher un état d'un réseau sur la base d'informations recueillies d'un dispositif de communication inclus dans le réseau, le dispositif d'affichage comprenant :
des premiers moyens d'affichage (1004) qui sont à même d'afficher une première ligne indiquant un trajet de transmission spécifique dans le réseau et un symbole dont la position d'affichage est déplacée de manière dynamique dans une direction dans laquelle des données sont transmises à travers le trajet de transmission ;
des seconds moyens d'affichage (1004) qui sont à même d'afficher sur une couche qui est située au-dessus d'une couche sur laquelle la première ligne est affichée une seconde ligne superposée à la première ligne et au symbole selon l'occurrence d'un événement prescrit qui est détecté sur la base des informations recueillies, dans lequel la seconde ligne a une partie chevauchante avec la première ligne ; et
des moyens de commande de symbole (1001) qui sont à même de déplacer le symbole dans une position ou une taille dans laquelle au moins une partie du symbole n'est pas dissimulée sous la seconde ligne ;
dans lequel les liaisons respectives correspondant à la première ligne et à la seconde ligne représentent chacune une relation de connexion entre un port disposé sur un dispositif et un port disposé sur un autre dispositif de manière telle que les ports puissent être distingués l'un de l'autre.

8. Programme pour amener un ordinateur à exécuter un procédé, l'ordinateur étant à même d'afficher un état d'un réseau sur la base d'informations recueillies d'un dispositif de communication inclus dans le réseau, le procédé comprenant :
l'affichage d'une première ligne qui indique un trajet de transmission spécifique dans le réseau et un symbole dont la position d'affichage est déplacée de manière dynamique dans une direction dans laquelle des données sont transmises à travers le trajet de transmission ;
l'affichage sur une couche qui est située au-dessus d'une couche sur laquelle la première ligne est affichée d'une seconde ligne superposée à la première ligne et au symbole selon l'occurrence d'un événement prescrit qui est détecté sur la base des informations recueillies, dans lequel la seconde ligne a une partie chevauchante avec la première ligne ; et
le déplacement du symbole dans une position ou dans une taille à laquelle au moins une partie du symbole n'est pas dissimulée sous la seconde ligne ;
dans lequel les liaisons respectives correspondant à la première ligne et à la seconde ligne représentent chacune une relation de connexion entre un port disposé sur un dispositif et un port disposé sur un autre dispositif de manière telle que les ports puissent se distinguer l'un de l'autre.
